# EUROPÄISCHE PATENTSCHRIFT

(11) **EP 1 835 220 B1**
(45) Veröffentlichungstag und Bekanntmachung des Hinweises auf die Patenterteilung: **26.11.2008**
(21) Anmeldenummer: 07002582.0
(22) Anmeldetag: 07.02.2007
(51) Int. Cl.: F16L 33/22, F16L 33/28

(54) **Verbindungsanordnung zur Verbindung eines Rohrstutzens mit einem Schlauch**
Connector assembly for connecting a pipe socket with a hose
Dispositif de liaison destiné à raccorder une tubulure et un tuyau flexible

(30) Priorität: 14.03.2006 DE 102006011617
(43) Veröffentlichungstag der Anmeldung: 19.09.2007
(73) Patentinhaber: NORMA Germany GmbH, 63277 Maintal (DE)
(72) Erfinder: Kertesz, Janos, 65719 Hofheim (DE); Röder, Gunter, 34346 Hann. Münden (DE); Wachter, Gerhard, 63654 Büdingen (DE)
(74) Vertreter: Knoblauch, Andreas

(56) Entgegenhaltungen:
- WO-A-20/04001272
- DE-U1- 9 300 414
- GB-A- 2 259 342
- US-A- 2 749 150

## Beschreibung

Die Erfindung betrifft eine Verbindungsanordnung mit einem Rohrstutzen und einem Schlauch aus einem gummiartigen Material entsprechend dem ersten Teil des Anspruchs 1 (WO 2004/001272).

In vielen Fällen werde Fluide, wie Flüssigkeiten oder Gase, durch Schläuche geleitet, die aus einem gummiartigen Material gebildet sind. Derartige Schläuche weisen eine relativ hohe Flexibilität auf. Es erfordert jedoch einen gewissen Aufwand, sie mit einem Rohrstutzen zu verbinden.

Zur Verbindung eines Schlauchs mit einem Rohrstutzen versieht man daher das Ende des Schlauchs üblicherweise mit einem Kupplungselement. Das Kupplungselement weist einen rohrartigen Anschlußfortsatz auf, auf den das Ende des Schlauchs aufgeschoben und mit geeigneten Klemmmitteln fixiert wird, beispielsweise einer Rohrschelle oder einer Ringfeder. Das Kupplungsstück kann dann mit dem Rohrstutzen verbunden werden.

Allerdings ist diese Verbindungsart relativ aufwendig, weil man mehrere Montageschritte benötigt. Darüber hinaus treten hier mindestens zwei Bereiche auf, an denen eine Abdichtung zuverlässig gewährleistet sein muß, nämlich zum einen bei der Verbindung zwischen dem Schlauch und dem Kupplungsstück und zum anderen bei der Verbindung zwischen dem Kupplungsstück und dem Rohrstutzen.

Der Erfindung liegt die Aufgabe zugrunde, eine Verbindung zwischen dem Rohrstutzen und dem Schlauch einfach zu gestalten.

Diese Aufgabe wird bei einer Verbindungsanordnung der eingangs genannten Art liegen durch die Merkmale des Anspruchs 1 gelöst. Der Rohrstutzen und der Schlauch in einer Dichtungszone aneinander an, die zumindest auf einem Teil ihrer Länge von einer Schlauchverstärkung umgeben ist, die einen Teil einer Befestigungsgeometrie bildet, mit der der Rohrstutzen und der Schlauch zusammengehalten werden.

Mit einer derartigen Ausgestaltung der Verbindungsanordnung verwendet man den Schlauch selbst als Dichtungselement, so daß zusätzliche Dichtungsmittel entbehrlich sind. Dies ist auf einfache Weise möglich, weil der Schlauch aus einem gummiartigen Material gebildet ist. Als gummiartiges Material kommen sowohl natürlicher Kautschuk als auch synthetischer Kautschuk (EPDM, NBR, HNBR, Silikon, MVQ, Fluorelastomer, wie FKM) oder andere Elastomere, insbesondere thermoplastische Elastomere, wie TPE-O, TPE-V, TEEE, infrage. Derartige Materialien werden vielfach ohnehin für die Erzeugung von Dichtungen verwendet. Der Schlauch selbst ist allerdings nicht stabil genug, um die Dichtigkeit in der Dichtungszone zu gewährleisten. Aus diesem Grunde ist die Schlauchverstärkung vorgesehen, die ein Aufdehnen des Schlauchs so verhindert, daß der Schlauch in dichtendem Eingriff mit dem Rohrstutzen bleibt. Gleichzeitig verwendet man die Schlauchverstärkung aber auch als Mittel, um eine mechanische Befestigung zwischen dem Schlauch und dem Rohrstutzen zu bewirken, insbesondere durch Formschluß. Die mechanische Verbindung zwischen dem Rohrstutzen und dem Schlauch dient vor allem dazu, Zugkräfte aufzunehmen, die den Schlauch vom Rohrstutzen herunterziehen könnten. Diese Ausgestaltung hat den Vorteil, daß man die mechanische Verbindung zwischen dem Rohrstutzen und dem Schlauch in unmittelbarer Nähe der Dichtungszone anordnen kann, was sich wiederum positiv auf die Dichtigkeit und die Dauerhaftigkeit der Verbindung zwischen dem Rohrstutzen und dem Schlauch auswirkt. Die Verbindungsanordnung hat den großen Vorteil, daß sie als steckbare Lösung ausgebildet werden kann, so daß weder eine Preßhülse noch eine Schlauchschelle erforderlich sind. Die Verbindung kann vielmehr durch eine einfache Bewegung hergestellt werden, bei der der Rohrstutzen in den Schlauch eingesteckt wird. Eine zusätzliche Dichtung, beispielsweise ein O-Ring, ist in der Regel nicht erforderlich.

Vorzugsweise weist die Schlauchverstärkung einen größeren Verformungswiderstand als der Schlauch auf. Damit läßt sich sicherstellen, daß der Schlauch durch die Schlauchverstärkung zuverlässig auf dem Rohrstutzen gehalten wird, auch wenn im Innern des Schlauches Drücke entstehen, die ohne die Schlauchverstärkung möglicherweise zu einem Abheben des Schlauchs vom Rohrstutzen führen könnten.

Vorzugsweise weist die Schlauchverstärkung einen Wärmeausdehnungskoeffizienten auf, der im Bereich von 60 % bis 150 % des Wärmeausdehnungskoeffizienten des Rohrstutzens liegt. Bei Temperaturänderungen ändert sich vielfach auch die Außenabmessung des Rohrstutzens. Diese steigt beispielsweise bei Temperaturerhöhungen an. Wenn sich nun die temperaturabhängige Vergrößerung der Schlauchverstärkung ähnlich verhält wie die temperaturabhängige Größenveränderung des Rohrstutzens, dann werden unzulässige Spannungen auf dem zwischen Schlauchverstärkung und Rohrstutzen befindlichen Abschnitt des Schlauchs klein gehalten oder sogar ganz vermieden.

Die Schlauchverstärkung ist formschlüssig mit dem Schlauch verbunden. Dies hat zwei Vorteile. Zum einen wird die Schlauchverstärkung zuverlässig am Schlauch festgehalten, auch wenn der Schlauch noch nicht auf den Rohrstutzen aufgeschoben worden ist. Zum anderen wird durch eine Verbindung zwischen dem Schlauch und der Schlauchverstärkung die mechanische Verbindung zwischen dem Schlauch und dem Rohrstutzen weiter verbessert, wenn ein Befestigungsmittel mit der Befestigungsgeometrie an der Schlauchverstärkung zusammenwirkt.

Hierbei greift die Schlauchverstärkung im Bereich der Dichtungszone in eine Vertiefung am Umfang des Schlauchs ein. Diese Ausbildung hat neben der Ausbildung einer formschlüssigen Verbindung zwischen der Schlauchverstärkung und dem Schlauch den Vorteil, daß der Schlauch beim Einschieben des Rohrstutzens im Bereich der Vertiefung verpreßt wird. Dort ist die Wandstärke des Schlauchs geringer, so daß das Aufweiten des Schlauchs hier zu einer stärkeren Kompression des Schlauchmaterials führt als in Axialrichtung außerhalb der Vertiefung. Durch diese Verpressung des Schlauchs ist es nicht mehr möglich, den Schlauch vom Rohrstutzen abzuziehen.

Zusätzlich kann die Schlauchverstärkung direkt haftend mit dem Schlauch verbunden sein. Eine direkt haftende Verbindung wird vielfach auch als "stoffschlüssige Verbindung" oder "haftungsmodifizierte Verbindung" bezeichnet. Eine derartige Verbindung liegt im Grunde immer dann vor, wenn der Schlauch und die Schlauchverstärkung miteinander verklebt oder verschweißt sind. Auch dann, wenn der Schlauch und die Schlauchverstärkung gemeinsam oder nacheinander aus unterschiedlichen Kunststoffen (Gummi wird in diesem Zusammenhang auch als Kunststoff betrachtet) gespritzt worden sind, wird hier eine direkt haftende Verbindung unterstellt.

Vorzugsweise weist die Schlauchverstärkung eine Faser- oder Gewebeeinlage auf, die in das Material des Schlauchs eingebettet ist. Eine derartige Einlage vermittelt dem Schlauch im Bereich der Dichtungszone eine ausreichende mechanische Stabilität, um den Schlauch zuverlässig am Umfang des Rohrstutzens festzuhalten.

In einer alternativen oder zusätzlichen Ausgestaltung kann vorgesehen sein, daß die Schlauchverstärkung durch einen Stützring gebildet ist, der den Schlauch zumindest auf einem Teil der Länge der Dichtungszone umgibt. Der Stützring wird im Hinblick auf zwei Aufgaben hin gestaltet. Zum einen muß der Stützring dafür sorgen, daß der Schlauch mit der notwendigen radialen Spannung am Rohrstutzen anliegt, um die Dichtigkeit zu bewirken. Zum anderen muß der Stützring so ausgestaltet sein, daß Haltemittel mit dem Stützring und dem Rohrstutzen zusammenwirken können, um zu verhindern, daß der Schlauch vom Rohrstutzen abgezogen werden kann.

Hierbei ist bevorzugt, daß die Schlauchverstärkung eine im wesentlichen senkrecht zu einer Mittelachse des Rohrstutzens verlaufende Haltefläche aufweist, an der ein Halteelement angreift, das eine formschlüssige Verbindung zwischen der Schlauchverstärkung und dem Rohrstutzen erzeugt. Das Halteelement ist in diesem Fall als eine Art Klammer anzusehen, die die Schlauchverstärkung und damit den Schlauch und den Rohrstutzen in axialer Richtung (bezogen auf den Rohrstutzen) zusammenhält. Je nach Ausbildung kann ein derartiges Halteelement vor dem Zusammenstecken von Schlauch und Rohrstutzen bereits an der Schlauchverstärkung oder am Rohrstutzen befestigt sein.

Bevorzugterweise weist die Schlauchverstärkung eine in Umfangsrichtung verlaufende Nut auf, deren Wand die Haltefläche bildet. Dies ist eine besonders einfache Ausgestaltung, um eine Haltefläche zu erzeugen. Eine derartige Nut kann beim Herstellen der Schlauchverstärkung gleich mit gefertigt werden, insbesondere dann, wenn die Schlauchverstärkung durch den Stützring gebildet ist, der aus einem Kunststoff gespritzt werden kann.

Vorzugsweise ist das Halteelement als federnder Ring ausgebildet. Der federnde Ring spreizt sich bei der Montage des Schlauchs auf dem Rohrstutzen auf und federt dann zusammen, wobei er einen Bereich der Schlauchverstärkung und einen Bereich des Rohrstutzens formschlüssig übergreift.

In einer bevorzugten Ausgestaltung ist vorgesehen, daß der Schlauch auf seiner Außenseite mindestens zwei radial vorstehende Nocken und dazwischen Lücken aufweist, daß hinter jeder Nocke ein Freiraum angeordnet ist und daß die Schlauchverstärkung mindestens zwei nach innen ragende Vorsprünge aufweist, die durch die Lücken und in die Freiräume passen. Der Schlauch und die Schlauchverbindung können dann nach Art eines Bajonettverschlusses miteinander verbunden werden. Hierzu wird die Schlauchverstärkung, beispielsweise der Stützring, in Axialrichtung auf das Ende des Schlauchs so aufgeschoben, daß die nach innen ragenden Vorsprünge durch die Lücken treten. Sobald die Vorsprünge an den Nocken axial vorbeigeführt worden sind, kann die Schlauchverstärkung gegenüber dem Schlauch verdreht werden. Die Vorsprünge kommen dann in Axialrichtung hinter den Nokken zu liegen, so daß die Schlauchverstärkung nicht mehr axial vom Schlauch abgezogen werden kann.

Hierbei ist bevorzugt, daß die Schlauchverstärkung und/oder der Schlauch einen Rastvorsprung tragen, der beim Verdrehen der Schlauchverstärkung gegenüber dem Schlauch einen zu überwindenden Druckpunkt bildet. Der Druckpunkt, der bei der Montage der Schlauchverstärkung auf den Schlauch zu überwinden ist, wäre auch bei der Demontage der Schlauchverstärkung vom Schlauch zu überwinden, so daß ein versehentliches Öffnen des "Bajonettverschlusses" praktisch nicht möglich ist.

Vorteilhafterweise weist die Kombination aus Schlauch und Schlauchverstärkung an ihrem dem Rohrstutzen zugewandten Ende eine konische Aufweitung auf. Diese konische Aufweitung erleichtert es, den Schlauch auf den Rohrstutzen aufzustecken.

Vorzugsweise weist der Rohrstutzen einen umlaufenden Vorsprung auf, der auf seiner dem Schlauch zugewandten Vorderseite abgeschrägt ist. Insbesondere dann, wenn man für die axiale Verbindung zwischen dem Rohrstutzen und der Schlauchverstärkung einen federnden Ring verwendet, hat die abgeschrägte Vorderseite des Vorsprungs den Vorteil, daß sie den Ring beim Aufschieben des Schlauchs auf den Rohrstutzen aufspreizt. Sobald der Ring mit einem radial nach innen ragenden Abschnitt den Vorsprung überwunden hat, rastet er hinter dem Vorsprung ein, so daß der Schlauch und der Rohrstutzen formschlüssig miteinander verbunden sind.

Vorzugsweise weist der Vorsprung auf seiner vom Schlauch abgewandten Rückseite eine Stutzenhaltefläche auf. An dieser Haltefläche, die senkrecht zur Achse des Rohres verlaufen oder hinterschnitten sein kann, kann sich dann das Halteelement festhalten.

Vorzugsweise weist der Rohrstutzen in einer vorbestimmten Entfernung von der Rückseite einen Begrenzungsvorsprung auf. Damit läßt sich auf einfache Weise sicherstellen, daß der Schlauch nur über eine definierte Länge auf den Rohrstutzen aufgeschoben werden kann, so daß man die Befestigungsgeometrie, insbesondere die Länge der Schlauchverstärkung, relativ exakt auf die Dichtungszone abstimmen kann.

Eine vorteilhafte Ausgestaltung sieht vor, daß die Schlauchverstärkung mehrere axial gerichtete und radial federnde Befestigungsfinger und einen axial verschiebbaren Verriegelungsring aufweist, der in einer Verriegelungsposition einer Verformung der Befestigungsfinger entgegenwirkt. In diesem Fall dient letztendlich der Verriegelungsring als Schlauchverstärkung, wobei der Verriegelungsring über die Befestigungsfinger auf den Schlauch wirkt. Da die Befestigungsfinger radial federn können, müssen sie in Umfangsrichtung voneinander getrennt sein. Dies hat zwar zur Folge, daß die unmittelbare Abstützung des Schlauchs in Umfangsrichtung nicht lückenlos ist. Sie reicht aber aus, um die Verbindung zwischen dem Schlauch und dem Rohrstutzen dicht zu machen. Eine Aufdehnung des Schlauchs bei einem Innendruck wird durch den Verriegelungsring zuverlässig vermieden. Die Ausgestaltung hat aber den besonderen Vorteil einer leichten Montage. Solange der Verriegelungsring sich nicht in der Verriegelungsposition befindet, können die Befestigungsfinger radial nach außen federn, so daß das Zusammenfügen von Schlauch und Rohrstutzen relativ einfach erfolgen kann. Wenn der Schlauch auf den Rohrstutzen aufgeschoben wird, dann federn die Befestigungsfinger radial nach außen und haken sich dann hinter einem Vorsprung ein, wenn Schlauch und Rohrstutzen ihre Endpositionen relativ zueinander erreicht haben. Wenn danach der Verriegelungsring in die Verriegelungsposition verschoben wird, dann ist eine weitere radiale Federbewegung der Befestigungsfinger nicht möglich. Der Schlauch wird auf dem Rohrstutzen gegen Expansion festgehalten und die Verbindung zwischen dem Schlauch und dem Rohrstutzen ist sozusagen fest.

Hierbei ist bevorzugt, daß der Verriegelungsring mit mindestens einem Befestigungsfinger in Axialrichtung verrastbar ist. Damit wird sichergestellt, daß sich der Verriegelungsring nicht versehentlich aus seiner Verriegelungsposition löst. Eine zusätzliche Rastposition kann in einer Lösestellung vorgesehen sein, in der der Verriegelungsring eine federnde Bewegung der Befestigungsfinger nicht verhindert. Dies erleichtert die Montage, weil sich bei der Montage der Verriegelungsring nicht versehentlich in die Verriegelungsposition bewegen kann.

Vorzugsweise ist zwischen mindestens zwei Befestigungsfingern mindestens ein Stützfinger angeordnet. Wenn die Lücken zwischen Befestigungsfingern in Umfangsrichtung zu groß werden, dann kann man Stützfinger vorsehen, um den Schlauch in Umfangsrichtung mit möglichst kleinen Lücken radial nach außen abzustützen.

Eine vorteilhafte Ausgestaltung sieht vor, daß die Befestigungsfinger am Rohrstutzen befestigt sind. In diesem Fall weist der Schlauch vorzugsweise eine umlaufende Nut auf, in die die Befestigungsfinger einrasten, wenn der Schlauch auf den Rohrstutzen aufgeschoben ist.

Eine alternative Ausgestaltung sieht vor, daß die Befestigungsfinger an einer Schlauchhülse befestigt und am Rohrstutzen elastisch verhakt sind. In diesem Fall ist ein zusätzliches Element erforderlich, nämlich die Schlauchhülse, die aber ohne größere Probleme mit dem Schlauch verbunden sein kann, beispielsweise durch Kleben oder durch eine formschlüssige Verbindung.

Eine weitere Möglichkeit, um eine Befestigung zwischen dem Schlauch und dem Rohrstutzen vorzusehen, besteht darin, daß die Befestigungsgeometrie als eine Bajonettverbindung ausgebildet ist. In diesem Fall weist der Rohrstutzen mindestens zwei Nuten an einer Umfangsfläche auf, die jeweils einen Abschnitt einer Schraubenlinie bilden. Die Schlauchverstärkung steht in axialer Richtung ringförmig über den Schlauch vor und weist im Bereich ihres axialen Endes innenseitig eine entsprechende Anzahl von Vorsprüngen auf, die dann in diese Nuten eingesetzt werden können. Wenn nun die Schlauchverstärkung gegenüber dem Rohrstutzen verdreht wird, dann wird der Schlauch auf den Rohrstutzen in axialer Richtung aufgeschoben.

Vorzugsweise weist der Rohrstutzen an seinem in den Schlauch eingesteckten Ende eine Verjüngung auf. Diese Verjüngung kann ebenfalls konisch ausgebildet sein, wobei auch hier der Konuswinkel relativ klein ist und vorzugsweise im Bereich von 1 bis 10° liegt. Die konische Verjüngung erleichtert es, den Schlauch auf den Rohrstutzen aufzuschieben, ohne daß die Dichtigkeit nennenswert beeinträchtigt wird.

Alternativ oder zusätzlich kann vorgesehen sein, daß sich der Schlauch an seinem auf den Rohrstutzen aufgesteckten Ende im Bereich der Dichtungszone erweitert. Auch dieser Konuswinkel kann relativ klein sein, beispielsweise im Bereich von 1 bis 10°.

Vorzugsweise weist der Schlauch und/oder der Rohrstutzen im Bereich der Dichtungszone mindestens einen Wulst auf. Wenn beispielsweise der Schlauch zwei radial nach innen ragende Wülste in einem vorbestimmten axialen Abstand zueinander aufweist, dann werden dadurch zwei O-Ring-Dichtungen nachgebildet, die allerdings direkt mit dem Schlauch verbunden sind. Durch die Verwendung von derartigen Wülsten schafft man in der Dichtungszone jeweils Abschnitte, in denen der Schlauch und der Rohrstutzen mit einer vergrößerten Flächenpressung aneinander anliegen, so daß die Dichtigkeit verbessert wird.

Alternativ oder zusätzlich kann vorgesehen sein, daß der Schlauch in der Dichtungszone eine mit dem Rohrstutzen zusammenwirkende Dichtlippe aufweist. Diese Dichtlippe kann beispielsweise radial nach innen gerichtet sein. Es ist auch möglich, sie an der axialen Stirnseite des Schlauchs vorzusehen.

Man kann auch vorsehen, daß der Schlauch und der Rohrstutzen in der Dichtungszone eine stirnseitige und eine umfangsseitige Berührungskomponente aufweisen. In diesem Fall wird bei Auftreten eines Innendrucks der Schlauch radial nach außen gegen die entsprechende Dichtfläche des Rohrstutzens gedrückt, was eine zusätzliche Sicherheit gegen ein Undichtigwerden der Verbindung gibt. Man kann Rohrstutzen und Schlauch an ihrer Berührungsstelle mit dem gleichen Innendurchmesser versehen, um eine Verwirbelung eines durchströmenden Mediums klein zu halten.

Hierbei kann vorgesehen sein, daß der Rohrstutzen eine stirnseitige umlaufende Nut aufweist, in die der Schlauch mit einem stirnseitigen umlaufenden Vorsprung eingreift. Wenn die Geometrie des Vorsprungs etwas von der Geometrie der Nut abweicht, dann ergibt sich eine Umformung des Vorsprungs in der Nut, was zu einer verbesserten Dichtung führt.

Dies gilt insbesondere dann, wenn die Nut mit zunehmender Tiefe eine abnehmende Breite aufweist. Mit Breite ist hier die radiale Erstreckung der Nut gemeint. Wenn der Schlauch mit der entsprechenden axialen Kraft gegen den Rohrstutzen gedrückt wird, ergibt dies eine hervorragende Dichtigkeit.

Die Erfindung wird im folgenden anhand von bevorzugten Ausführungsbeispielen in Verbindung mit der Zeichnung beschrieben. Hierin zeigen:
- Fig. 1: eine erste Ausgestaltung einer Verbindungsanordnung,
- Fig. 2: eine zweite Ausgestaltung einer Verbindungsanordnung,
- Fig. 3: eine dritte Ausgestaltung einer Verbindungsanordnung,
- Fig. 3a: eine vergrößerte Ausschnittsansicht III nach Fig. 3,
- Fig. 4: eine vierte Ausgestaltung einer Verbindungsanordnung,
- Fig. 4a: eine vergrößerte Ausschnittsansicht IV nach Fig. 4,
- Fig. 5: eine fünfte Ausgestaltung einer Verbindungsanordnung,
- Fig. 6: eine sechste Ausgestaltung einer Verbindungsanordnung,
- Fig. 7: eine siebte Ausgestaltung einer Verbindungsanordnung,
- Fig. 8: eine achte Ausgestaltung einer Verbindungsanordnung,
- Fig. 9: eine neunte Ausgestaltung einer Verbindungsanordnung,
- Fig. 10: eine zehnte Ausgestaltung einer Verbindungsanordnung,
- Fig. 11: einen Schnitt XI-XI nach Fig. 12,
- Fig. 12: eine elfte Ausgestaltung einer Verbindungsanordnung in einer ersten Position,
- Fig. 13: einen Schnitt XIII-XIII nach Fig. 14,
- Fig. 14: die Ausgestaltung nach Fig. 12 in einer zweiten Position,
- Fig. 15: eine zwölfte Ausgestaltung einer Verbindungsanordnung in Explosionsdarstellung,
- Fig. 16: einen Schnitt durch die Ausgestaltung nach Fig. 15,
- Fig. 17: die Ausgestaltung nach Fig. 15 in zusammengesetztem, aber nicht verriegelten Zustand,
- Fig. 18: die Ausgestaltung nach Fig. 17 im Schnitt XVIII-XVIII nach Fig. 20,
- Fig. 19: die Ausgestaltung nach Fig. 17 im Schnitt XIX-XIX nach Fig. 20,
- Fig. 20: einen Schnitt XX-XX nach Fig. 19,
- Fig. 21: eine dreizehnte Ausgestaltung einer Verbindungsanordnung in getrenntem Zustand,
- Fig. 22: die Verbindungsanordnung nach Fig. 21 im zusammengesetzten Zustand,
- Fig. 23: einen Schnitt XXIII-XXIII nach Fig. 22,
- Fig. 24: eine Stirnseitenansicht eines Schlauchs in perspektivischer Darstellung,
- Fig. 25: eine vierzehnte Ausgestaltung einer Verbindungsanordnung in perspektivischer Explosionsdarstellung mit dem Schlauch nach Fig. 24,
- Fig. 26: eine Ansicht der Ausgestaltung nach Fig. 25 im verbundenen Zustand im Schnitt XXVI-XXVI nach Fig. 27,
- Fig. 27: eine Schnittdarstellung XXVII-XXVII aus Fig. 26,
- Fig. 28: eine weitere Ausgestaltung einer Dichtungszone,
- Fig. 29: eine abgewandelte Ausgestaltung einer Dichtungszone und
- Fig. 30: eine noch weiter abgewandelte Ausgestaltung einer Dichtungszone.

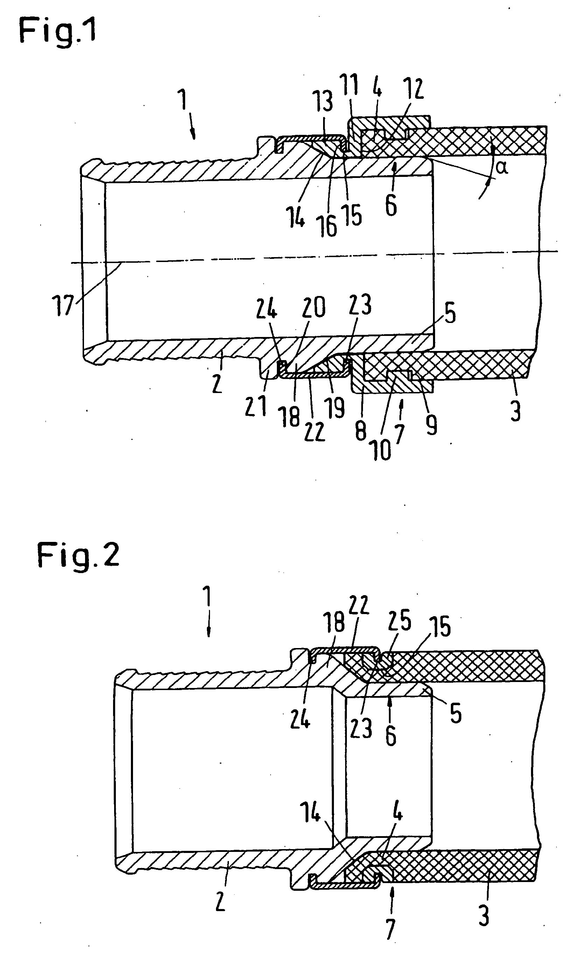

Eine in Fig. 1 dargestellte Verbindungsanordnung 1 dient zum Verbinden eines Rohrstutzens 2 mit einem Schlauch 3 aus einem gummiartigen Material und zwar dergestalt, daß zwischen dem Rohrstutzen 2 und dem Schlauch 3 keine weiteren Kupplungselemente erforderlich sind.

Der Rohrstutzen 2 ist beispielsweise aus einem Kunststoff gebildet, insbesondere einem thermoplastischen Kunststoff. Bevorzugterweise ist der Rohrstutzen 2 gebildet aus Polyamid (PA), Polyester, PBT, PET, PBN, PEN, PPS, PPA, Polypropylen (PP), Polyethylen (PE), Polyacetal (POM), PTFE, ETFE, PVDF. Der Rohrstutzen 2 kann auch aus einem Metall gebildet sein, beispielsweise Aluminium.

Der Schlauch 3 ist aus einem gummiartigen Material gebildet. Dabei kann es sich um natürlichen Kautschuk oder auch um synthetischen Kautschuk (EPDM, NBR, HNBR, Silikon, MVQ, FKM) oder andere Fluorelastomere handeln. Infrage kommen auch thermoplastische Elastomere, wie TPE-O, TPE-V, TEEE.

Der Schlauch 3 aus dem gummiartigen Material hat den Vorteil, daß er relativ flexibel ist. Bei Drücken, die im Innern auftreten, kann er sich jedoch normalerweise etwas aufweiten.

Der Schlauch 3 ist mit seinem Ende 4 auf ein Ende 5 des Rohrstutzens 2 aufgeschoben. Dabei ist eine Dichtungszone 6 gebildet, in der sich die beiden Enden 4, 5 von Rohrstutzen 2 und Schlauch 3 überlappen.

Eine Schlauchverstärkung 7, die im Ausführungsbeispiel der Fig. 1 als Stützring 8 ausgebildet ist, umgibt den Schlauch 3 zumindest über die Länge der Dichtungszone 6. Es soll hier angemerkt werden, daß die Dichtungszone 6 nicht unbedingt den gesamten Überlappungsbereich zwischen den beiden Enden 4, 5 umfassen muß. Die Abdichtung in der Dichtungszone 6 wird hier dadurch erreicht, daß der Innendurchmesser des Schlauchs 3 an den Außendurchmesser des Rohrstutzens 2 angepaßt ist.

Der Stützring 8 kann ebenfalls aus einem Kunststoff gebildet sein. Er weist jedoch einen größeren Verformungswiderstand als der Schlauch 3 auf. Der Wärmeausdehnungskoeffizient des Stützrings 8 sollte ungefähr dem Wärmeausdehnungskoeffizienten des Rohrstutzens 2 entsprechen. Eine exakte Übereinstimmung ist hier allerdings nicht erforderlich. Es reicht aus, wenn der Wärmeausdehnungskoeffizient des Stützrings 8 in einem Bereich von 60 % bis 150 % des Wärmeausdehnungskoeffizienten des Rohrstutzens 2 liegt.

Der Stützring 8 verhindert, daß sich der Schlauch 3 im Bereich der Dichtungszone 6 aufweitet, wenn im Innern des Schlauchs 3 ein Druckanstieg erfolgt.

Der Stützring 8 ist formschlüssig auf der radialen Außenseite des Schlauchs 3 gehalten. Der Schlauch 3 weist hierzu eine umlaufende Nut 9 auf, in die ein radial nach innen ragender umlaufender Vorsprung 10 am Stützring 8 ragt. Anstelle eines umlaufenden Vorsprungs 10 kann man auch mehrere in Umfangsrichtung mit Abstand zueinander angeordnete Vorsprünge 10 verwenden. In diesem Fall ist es auch nicht erforderlich, daß die Nut 9 in Umfangsrichtung durchgehend ausgebildet ist. Vielmehr reichen in diesem Fall radiale Ausnehmungen in der Umfangswand des Schlauchs 3 aus, die den Vorsprüngen 10 entsprechen.

Im Bereich der Nut 9 weist der Schlauch 3 eine etwas geringere Wandstärke als in Axialrichtung außerhalb der Nut 9 auf. Wenn der Rohrstutzen 2 in den Schlauch 3 eingeschoben wird, dann wird der Schlauch 3 an seinem Ende 4 geringfügig aufgeweitet. Da der Schlauch 3 im Bereich der Nut 9 eine geringere Wandstärke hat, führt diese radiale Aufweitung zu einer etwas stärkeren Kompression des Materials des Schlauchs im Bereich der Nut 9 als axial außerhalb davon. Dies wiederum führt zu einer Verpressung des Schlauchs 3 im Bereich der Dichtungszone 6, so daß der Schlauch 3 nicht mehr an dem radial nach innen ragenden Vorsprung 10 des Stützrings 8 vorbeigezogen werden kann. Man verhindert damit, daß der Schlauch 3 vom Rohrstutzen 2 abgezogen werden kann.

Der Stützring 8 weist einen Schenkel 11 auf, der sich radial nach innen erstreckt und eine Stirnseite 12 des Schlauchs 3 überdeckt. An den Schenkel 11 schließt sich ein Fortsatz 13 mit einer konischen Aufweitung 14 an seinem dem Rohrstutzen 2 zugewandten Ende an. Der Fortsatz 13 weist eine umlaufende Nut 15 auf, die an ihrem dem Schlauch 3 zugewandten Ende am Schenkel 11 endet. Auf der gegenüberliegenden Seite bildet sie eine Haltefläche 16. Diese Haltefläche 16 ist im wesentlichen senkrecht zur Achse 17 des Rohrstutzens 2 gerichtet. Sie kann aber auch hinterschnitten ausgebildet sein.

Der Rohrstutzen 2 weist einen umlaufenden Vorsprung 18 auf, der an seiner dem Schlauch 3 zugewandten Vorderseite 19 konisch abgeschrägt ist. Der Neigungswinkel der Vorderseite 19 entspricht im wesentlichen dem Neigungswinkel der Aufweitung 14. Er liegt im Bereich von etwa 30° bis etwa 60°.

An seiner Rückseite weist der Vorsprung 18 eine Stutzenhaltefläche 20 auf.

In einer vorbestimmten kleinen Entfernung zur Stutzenhaltefläche 20 weist der Rohrstutzen 2 einen Begrenzungsvorsprung 21 auf, der in Radialrichtung geringfügig über den Vorsprung 18 übersteht.

Die Umfangswand des Rohrstutzens 2 ist im Bereich des Endes 5 konisch verjüngt. Aus Gründen der Deutlichkeit übertrieben groß ist der entsprechende Konuswinkel α eingezeichnet. Er liegt in der Größenordnung von etwa 1 bis 10°. In entsprechender Weise kann sich der Schlauch 3 hier mit einem kleinen Konuswinkel im Bereich von 1 bis 10° aufweiten. Zweckmäßigerweise ist aber nur eines der beiden Elemente Rohrstutzen 2 oder Schlauch 3 aufgeweitet, um einerseits das Aufschieben des Schlauchs 3 auf den Rohrstutzen 2 zu erleichtern, andererseits die Dichtigkeit nicht zu beeinträchtigen.

Ein federnder Ring 22 weist zwei radial nach innen ragende Schenkel 23, 24 auf, wobei der dem Schlauch 3 zugewandte Schenkel 23 an der Haltefläche 16 in der Nut 15 anliegt und der dem Rohrstutzen 2 zugewandte Schenkel 24 an der Stutzenhaltefläche 20 am Vorsprung 18 anliegt.

Um die Verbindungsanordnung herzustellen, wird der Schlauch 3 mit dem Stützring 8 versehen. Dies kann bereits bei der Konfektionierung des Schlauchs 3 erfolgen.

Danach wird der Federring 22 mit dem Schenkel 23 in die Nut 15 eingesetzt.

Alsdann kann der Schlauch 3 auf den Rohrstutzen 2 aufgeschoben werden. Die konische Verjüngung des Endes 5 des Rohrstutzens 2 kann das Aufschieben erleichtern.

Der Schenkel 24 des Federrings 22 kommt beim Aufschieben des Schlauchs 3 in Anlage an die schräge Vorderseite 19 des Vorsprungs 18, so daß der Federring 22 aufgeweitet wird. Da der Federring 22 in der Regel in Axialrichtung gleichmäßig aufgeweitet wird, dient der Schenkel 11 dazu, den Federring 22 mit dem Stützring 8 weiter in Richtung auf den Begrenzungsvorsprung 21 zu schieben.

Etwa dann, wenn die Aufweitung 14 zur Anlage an die Vorderseite 19 kommt, rastet der Schenkel 24 in die zwischen dem Vorsprung 18 und dem Begrenzungsvorsprung 21 gebildete Nut ein, so daß der Schenkel 24 die Stutzenhaltefläche 20 hintergreift.

Sobald der Federring 22 mit seinen beiden Schenkeln 23, 24 die Haltefläche 16 und die Stutzenhaltefläche 20 hintergreift, ist der Schlauch 3 gegen ein axiales Abziehen vom Rohrstutzen 2 gesichert.

Der Schlauch 3 dichtet in der Dichtungszone 6 gegenüber dem Rohrstutzen 2 ab. Diese Abdichtung bleibt auch dann erhalten, wenn innerhalb des Schlauchs 3 ein höherer Druck auftritt, weil der Stützring 8 als Schlauchverstärkung 7 dient und ein Aufweiten des Schlauchs 3 im Bereich der Dichtungszone 6 verhindert.

Der Stützring 8 kann ebenfalls aus einem Kunststoff gebildet sein. Man kann ihn aber auch aus einem Metall bilden.

Anstelle eines Federringes 22 kann man auch ein anderes Mittel zum axialen Verbinden von Rohrstutzen 2 und Stützring 8 und damit dem Schlauch 3 verwenden.

Bei der Verbindungsanordnung 1 hat man nur eine einzige Dichtungszone 6 zwischen dem Schlauch 3 und dem Rohrstutzen 2. Man benötigt keine zusätzlichen Dichtungselemente, die verlorengehen könnten. Dies erhöht die Prozeßsicherheit. Darüber hinaus wird die Verbindungsanordnung 1 baulich kurz ausgeführt, weil man sich ein Übergangsstück zwischen dem Schlauch 3 und dem Rohrstutzen 2 sparen kann.

Eine derartige Verbindungsanordnung läßt sich als steckbare Lösung ausbilden. Es ist weder eine Schlauchschelle noch eine Preßhülse oder dergleichen erforderlich. Vielmehr reicht es aus, wenn man das Ende 4 des Schlauchs 3 in die Schlauchverstärkung 7 einsetzt. Dies ist aber ohne weiteres und ohne größeren Aufwand möglich, solange der Schlauch 3 noch nicht auf den Rohrstutzen 2 aufgeschoben worden ist. Zur Herstellung der Verbindungsanordnung ist also nur eine lineare Bewegung des Rohrstutzens 2 in den Schlauch 3 erforderlich. Zum Lösen der Verbindungsanordnung 1 muß man gegebenenfalls den Federring 22 aufweiten. Auch dies ist aber mit geringem Aufwand möglich.

Die Fig. 2 bis 14 zeigen abgewandelte Ausführungsformen der Verbindungsanordnung 1. Gleiche und entsprechende Bauteile wie in Fig. 1 sind mit den gleichen Bezugszeichen versehen.

Die Verbindungsanordnung 1 nach Fig. 2 unterscheidet sich von der Verbindungsanordnung 1 nach Fig. 1 dadurch, daß die Schlauchverstärkung 7 nun als Einsatz 25 ausgebildet ist, der in die Umfangswand des Schlauchs 3 eingesetzt ist. Der Einsatz kann, wie dargestellt, als diskretes Element ausgebildet sein. Der Einsatz 25 kann aber auch dadurch gebildet sein, daß der Schlauch 3 im Bereich der Schlauchverstärkung durch Fasern, Gewebe oder ähnliche Einlagen so weit verstärkt ist, daß er sich im Bereich der Dichtungszone 6 nicht mehr radial dehnen läßt. Man kann den Einsatz 25 auch gemeinsam mit dem Schlauch 3 spritzen oder ihn einvulkanisieren.

Im Ausführungsbeispiel der Fig. 2 ist die Abschrägung 14 unmittelbar an der Innenseite des Schlauchs 3 vorgesehen.

Der Einsatz 25 weist die Nut 15 auf, in die das als Federring 22 ausgebildete Halteelement mit seinem Schenkel 23 eingreift.

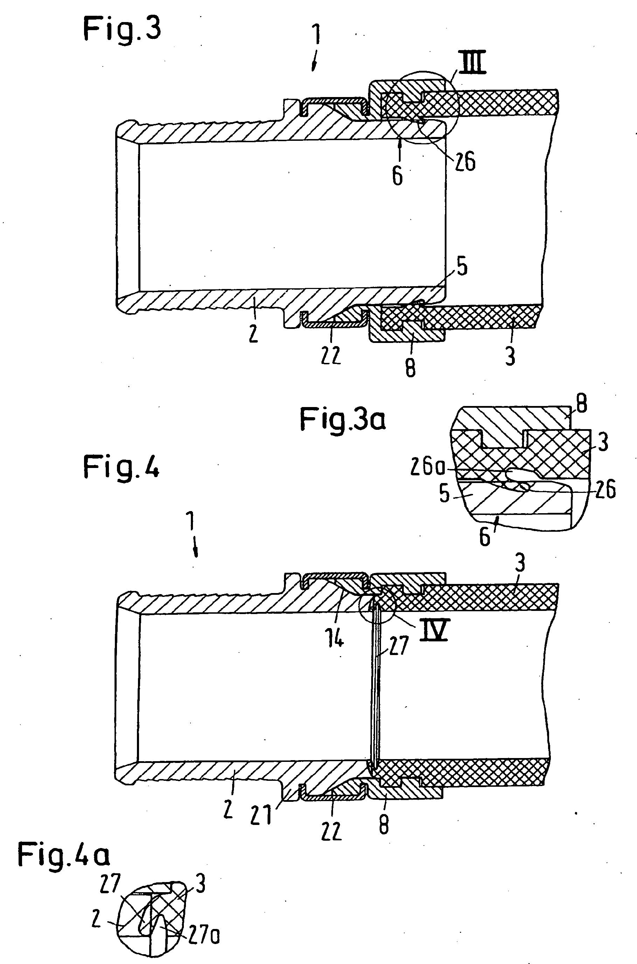

Bei dem Ausführungsbeispiel der Verbindungsanordnung 1 nach Fig. 3 entspricht der Rohrstutzen 2 und der Stützring 8 sowie der Federring 22 der Ausgestaltung nach Fig. 1. Geändert hat sich die Ausbildung des Schlauchs 3. Der Schlauch 3 weist im Bereich der Dichtungszone 6 eine Dichtlippe 26 auf, die am Ende 5 des Rohrstutzens 2 anliegt. Der radiale Abstand zwischen dem Schlauch 3 und dem Ende des Rohrstutzens 2 ist hier übertrieben groß dargestellt. In der Regel wird dieser radiale Abstand nur die Größe eines Bruchteils eines Millimeters haben. Der Schlauch 3 weist im Bereich der Dichtlippe 26 eine Ausnehmung 26a auf, in die die Dichtlippe 26 zumindest teilweise hineinverdrängt werden kann, wenn der Schlauch 3 auf den Rohrstutzen 2 aufgeschoben wird. Bei Auftreten eines Drucks im Schlauch 3 wird die Dichtlippe 26 gegen die Umfangswand des Rohrstutzens 2 gepreßt.

Bei der Ausgestaltung nach Fig. 4 haben der Rohrstutzen 2 und der Schlauch 3 praktisch den gleichen Innendurchmesser.

Der Schlauch 3 weist an seiner Stirnseite eine Dichtlippe 27 auf, die an der dem Schlauch 3 zugewandten Stirnseite des Rohrstutzens 2 anliegt, wenn der Schlauch 3 mit Hilfe des Federrings 22 und des Stützrings 8 am Rohrstutzen 2 montiert ist. In diesem Fall dichtet der Schlauch 3 nur stirnseitig am Rohrstutzen 2 ab. Der Schlauch 3 weist im Bereich der Dichtlippe 27 an seiner Stirnseite eine Ausnehmung 27a auf, in die die Dichtlippe teilweise verdrängt werden kann, wenn Schlauch 3 und Rohrstutzen 2 stirnseitig aneinander anliegen.

Da der Schlauch 3 nun in Radialrichtung nicht mehr außerhalb des Rohrstutzens 2 angeordnet sein muß, kann der Stützring 8 nunmehr ebenfalls einen verringerten Außendurchmesser aufweisen. Er weist etwa den gleichen Außendurchmesser auf, wie der Begrenzungsvorsprung 21, der wiederum den gleichen Außendurchmesser hat, wie der Federring 22 in der dargestellten montierten Position.

Im übrigen ist aber die Aufweitung 14 genauso am Stützring 8 ausgebildet wie bei der Ausgestaltung nach Fig. 1.

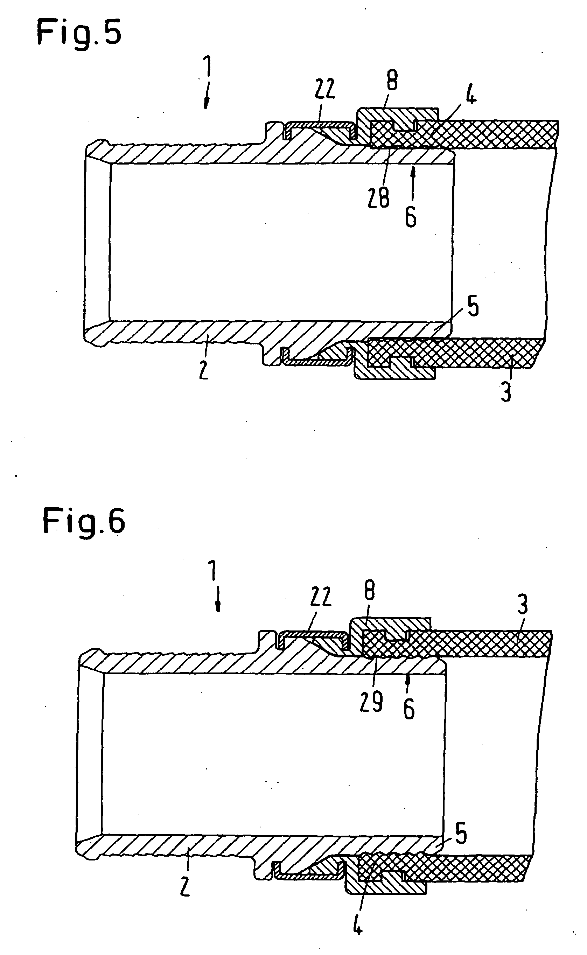

Fig. 5 zeigt eine weitere Abwandlung einer Verbindungsanordnung, bei der der Schlauch 3 an seinem Ende 4, das mit dem Ende 5 des Rohrstutzens 2 zusammen die Dichtungszone 6 bildet, mehrere nach innen ragende Wülste 28 aufweist. Im vorliegenden Ausführungsbeispiel sind fünf derartige Wülste 28 vorgesehen. Prinzipiell reichen aber auch zwei derartige Wülste 28 aus.

Bei fünf Wülsten 28 befinden sich in der Dichtungszone 6 fünf einzelne Dichtbereiche, an denen der Schlauch 3 mit einer verstärkten Flächenpressung am Ende 5 des Rohrstutzens 2 anliegt. Die ergibt hervorragende Dichtigkeitseigenschaften.

Bei der Ausgestaltung nach Fig. 6 weist der Rohrstutzen im Bereich seines Endes 5 fünf umlaufende Vorsprünge 29 auf, die sich in die radiale Innenwand des Schlauchs 3 eindrücken. Auch hierdurch wird die Dichtigkeit verbessert, weil sich die Dichtungslänge erhöht.

Letztendlich ist es auch möglich, an der Innenseite des Schlauchs 3 im Bereich seines Endes 4 eine Gestaltung vorzunehmen, die der Gestaltung des Rohrstutzens 2 an dessen Ende 5 komplementär ist, so daß beispielsweise die in Fig. 5 dargestellten Wülste 28 in "Täler" zwischen einzelnen Vorsprüngen 29 der Fig. 6 eingreifen.

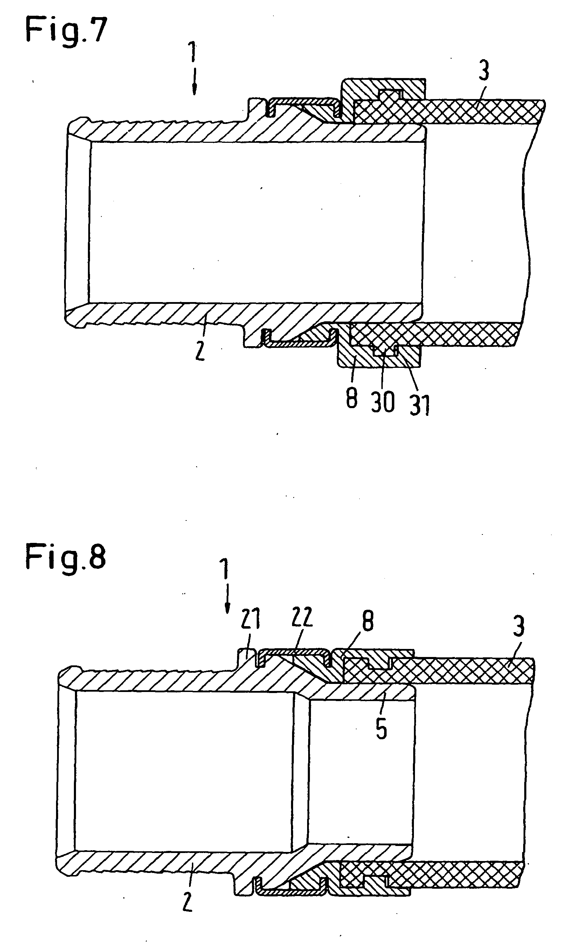

Fig. 7 zeigt eine gegenüber Fig. 1 abgewandelte Ausgestaltung einer Verbindungsanordnung 1.

Während bei Fig. 1 ein radial nach innen gerichteter Vorsprung 10 am Stützring 8 vorgesehen ist, der in eine Nut 9 am Schlauch 3 eingreift, weist bei der Ausgestaltung nach Fig. 7 der Schlauch 3 einen radial nach außen gerichteten Vorsprung 30 auf, der in eine Nut 31 am Stützring eingreift. Wie bei der Ausgestaltung nach Fig. 1 auch, können Vorsprung 30 und Nut 31 in Umfangsrichtung durchgehend ausgebildet sein. Man kann sie jedoch auch unterbrechen, wobei sowohl Vorsprung 30 als auch Nut 31 dann in Umfangsrichtung aneinander angepaßte Positionen und Längen haben müssen.

Fig. 8 zeigt eine Ausgestaltung entsprechend Fig. 1, bei der der Rohrstutzen 2 im Bereich seines Endes 5 einen verringerten Außen- und einen verringerten Innendurchmesser aufweist. In diesem Fall kann, wie bei der Ausgestaltung nach Fig. 4, der Stützring 8 einen verringerten Außendurchmesser aufweisen, so daß der Außendurchmesser des Stützrings 8 nicht über den Außendurchmesser des Begrenzungsvorsprungs 21 und den Außendurchmesser des Federrings 22 hinausgeht.

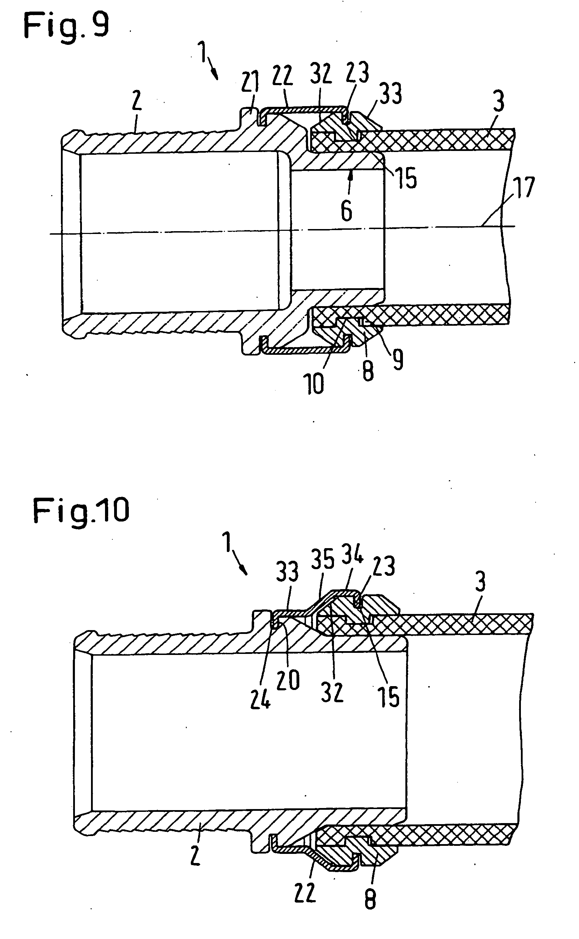

Fig. 9 zeigt eine Ausgestaltung einer Verbindungsanordnung 1, bei der die Form des Stützrings 8 verändert ist. Der Stützring 8 weist sowohl an seiner dem Rohrstutzen 2 zugewandten Seite eine abgeschrägte Flanke 32 als auch an der gegenüberliegenden Seite eine abgeschrägte Flanke 33 auf. Der Stützring ist damit bezogen auf eine Ebene, die auf der Achse 17 des Rohrstutzens 2 senkrecht steht, symmetrisch ausgebildet. Die Nut 15, die den Schenkel 23 des Federrings 22 aufnimmt, befindet sich etwa in der axialen Mitte des Stützrings 8.

Der Rohrstutzen 2 weist im Bereich der Dichtungszone 6 einen verminderten Außendurchmesser auf, so daß der Federring 22 den gleichen Außendurchmesser hat wie der Begrenzungsvorsprung 21.

Bei der Ausgestaltung der Verbindungsanordnung 1 nach Fig. 10 weist der Rohrstutzen 2 wiederum einen gleichbleibend großen Innendurchmesser auf, so daß der außen auf den Rohrstutzen 2 aufgeschobene Schlauch 3 einen entsprechend größeren Außendurchmesser aufweist. Die Form des Stützrings 8 entspricht im wesentlichen der Form des Stützrings aus der Fig. 9.

Geändert hat sich die Form des Federbügels 22. Der Federbügel 22 weist nach wie vor zwei radial nach innen gerichtete Schenkel 23, 24 auf, wobei der Schenkel 23 in die Nut 15 am Stützring 8 eingreift und der Schenkel 24 die Stutzenhaltefläche 20 hintergreift.

Der Federring 22 ist jedoch gestuft, wobei zwischen zwei im wesentlichen achsparallelen Abschnitten 33, 34 ein Übergangsabschnitt 35 angeordnet ist. Mit dieser Ausgestaltung ist es möglich, den Übergangsabschnitt dicht an der Flanke 32 des Stützrings 8 zu halten, so daß größere freie Federwege des Federrings 22 vermieden werden können.

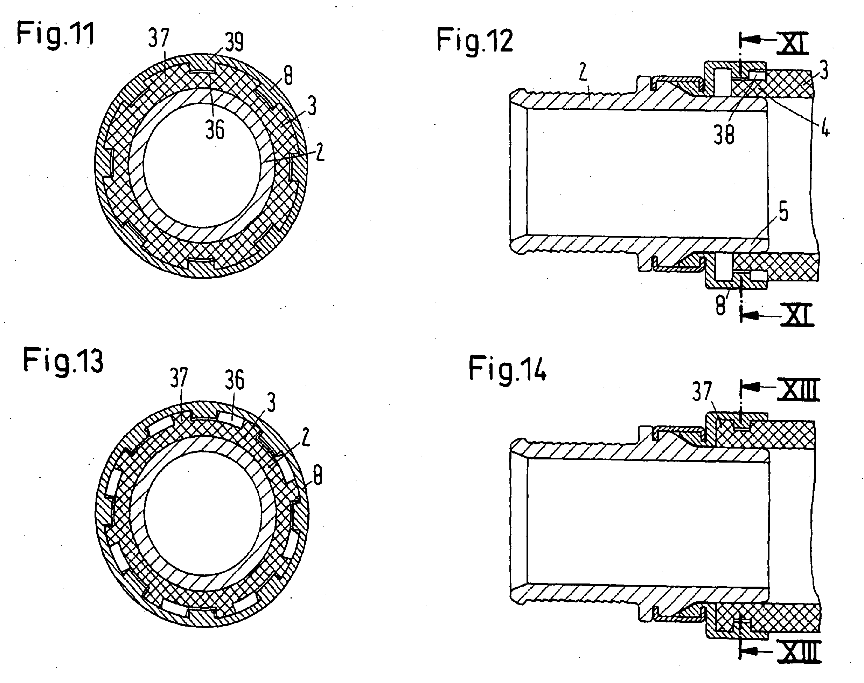

Bei der Ausgestaltung der Fig. 11 bis 14 ist der Stützring 8 lösbar mit dem Schlauch 3 verbunden.

Der Schlauch 3 weist im Bereich seines Endes 4 mehrere achsparallele Nuten 36 auf.

Zwischen den Nuten 36 sind radial nach außen ragende Nocken 37 angeordnet. Auf der vom Rohrstutzen 2 abgewandten Seite der Nocken 37 befindet sich jeweils ein in Umfangsrichtung verlaufender Freiraum 38.

Der Stützring 8 weist radial nach innen gerichtete Vorsprünge 39 auf, deren Erstreckung in Umfangsrichtung etwas kleiner ist als die Erstreckung der Nuten 36 in Umfangsrichtung. Die axiale Länge der Vorsprünge 39 ist etwas kleiner als die axiale Länge des Freiraumes 38.

Man kann nun den Schlauch 3 und den Stützring 8 in Axialrichtung zunächst zusammensetzen, indem die Vorsprünge 39 in die Nuten 6 eingeschoben werden. Sobald die Vorsprünge 39 die Freiräume 38 erreicht haben, kann der Schlauch 3 gegenüber dem Stützring 8 (oder umgekehrt) verdreht werden, so daß der Schlauch 3 und der Stützring 8 nach Art eines Bajonettverschlusses gegeneinander verriegelt sind.

In nicht näher dargestellter Weise kann vorgesehen sein, daß der Vorsprung 39 beim Eindrehen in den Freiraum 38 einen kleinen Wulst überwinden muß. In gleicher Weise muß der Vorsprung 39 dann beim Ausdrehen aus dem Freiraum 38 diesen Wulst überwinden, so daß ein versehentliches Selbstöffnen des Bajonettverschlusses praktisch nicht möglich ist.

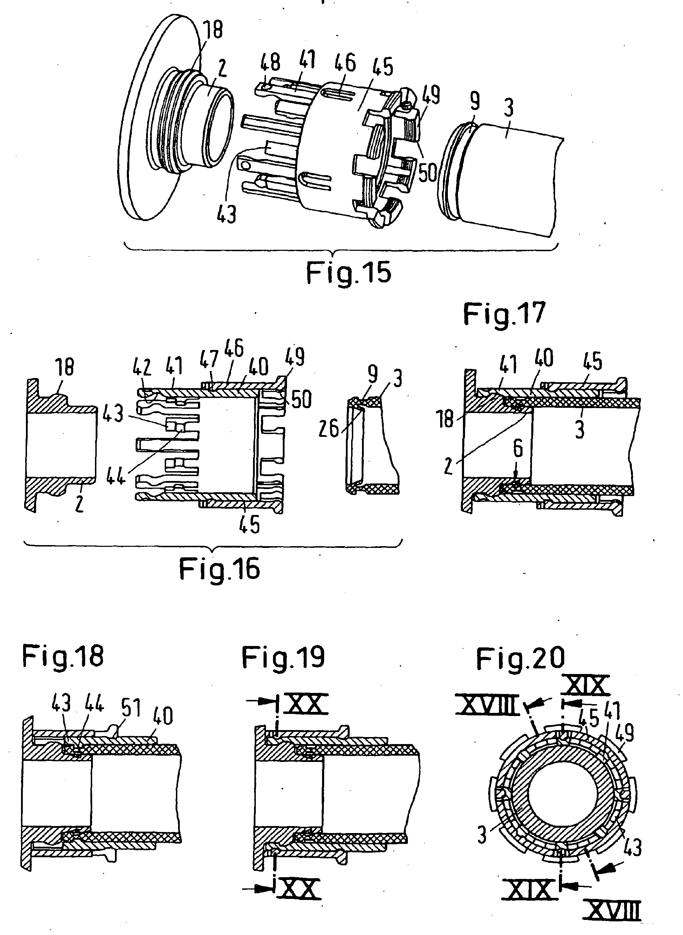

Die Fig. 15 bis 20 zeigen eine zwölfte Ausgestaltung einer Verbindungsanordnung, bei der gleiche Teile mit den gleichen Bezugszeichen wie bisher auch versehen sind.

Hinzugekommen ist eine Schlauchhülse 40, die mehrere in Richtung zum Rohrstutzen 2 hin gerichtete Befestigungsfinger 41 aufweist. Die Befestigungsfinger 41 weisen an ihrer radialen Innenseite eine Ausbuchtung 42 auf, die an die Form des Vorsprungs 18 am Rohrstutzen angepaßt ist. Die einzelnen Befestigungsfinger 41 weisen in Umfangsrichtung einen gewissen Abstand zueinander auf, so daß sie jeweils einzeln radial nach außen federn können. Damit ist es möglich, daß die'Schlauchhülse 40 auf den Rohrstutzen aufgeschoben werden kann, wobei, wie in Fig. 17 dargestellt, die Befestigungsfinger 41 sich am Vorsprung 18 verhaken.

Zwischen jeweils zwei Befestigungsfingern 41 sind Stützfinger 43 angeordnet, die an ihrer radialen Innenseite jeweils einen Vorsprung 44 tragen, der in die Nut 9 am Schlauch 3 eingreift. Auch die Stützfinger 43 können etwas federn, so daß die Vorsprünge 44 in Eingriff mit der Nut 9 am Schlauch 3 gebracht werden können.

Die Schlauchhülse 40 weist einen Verriegelungsring 45 auf, der in Axialrichtung relativ zur Schlauchhülse 40 verschoben werden kann und zwar aus einer in den Fig. 15 bis 17 dargestellten Löseposition in eine in den Fig. 18 und 19 dargestellten Verriegelungsposition. Der Verriegelungsring 45 weist federnde Zungen 46 auf, die einen Rastvorsprung 47 tragen, der in der Verriegelungsposition mit entsprechenden Ausnehmungen 48 auf den Befestigungsfingern 41 in Eingriff kommt. Sobald der Verriegelungsring 45 in der Verriegelungsposition eingerastet ist, ist eine Verlagerung des Verriegelungsrings 45 gegenüber der Schlauchhülse 40 nur unter Anwendung äußerer Kräfte möglich. Eine versehentliche Verschiebung ist praktisch nicht möglich.

Der Verriegelungsring 45 weist an dem dem Rohrstutzen 2 abgewandten Ende mehrere Federlaschen 49 auf, die jeweils einen radial nach innen gerichteten Wulst 50 tragen. Der Wulst 50 rastet in der Verriegelungsposition in einer umlaufenden Nut 51 in der Schlauchhülse 40 ein, um die Verrastung noch zu verstärken.

Zur Montage wird zunächst die Schlauchhülse 40 so auf den Schlauch aufgeschoben, daß die Vorsprünge 44 an den Stützfingern 43 in die Nut eingreifen. Die Schlauchhülse 40 ist damit vorläufig auf dem Schlauch 3 fixiert. Der Verriegelungsring 45 befindet sich dann in der in den Fig. 15 bis 17 dargestellten Löseposition.

Wie in Fig. 17 dargestellt ist, wird dann die mit dem Schlauch 3 verbundene Schlauchhülse 40 so auf den Rohrstutzen 2 aufgeschoben, daß die Befestigungsfinger 41 mit dem Vorsprung 18 am Rohrstutzen 2 verrasten. Gleichzeitig wird der Schlauch 3 außen auf den Rohrstutzen 2 aufgeschoben, so daß die Dichtungszone 6 gebildet ist.

In einem weiteren Verbindungsschritt wird der Verriegelungsring 45 gegenüber der Schlauchhülse 40 in Richtung auf den Schlauchstutzen 2 verschoben und zwar so lange, bis die Rastvorsprünge 47 in den Ausnehmungen 48 einrasten. Gleichzeitig rasten die Wülste 50 in der Nut 51 auf der Außenseite der Schlauchhülse 40 ein, so daß der Verriegelungsring 45 nur unter Aufbietung gewisser Kräfte wieder in die entgegengesetzte Richtung verschoben werden kann.

Der Verriegelungsring 45 verhindert nun ein radiales Ausfedern der Befestigungsfinger 41, so daß die Schlauchhülse 40 nicht mehr vom Rohrstutzen 2 gelöst werden kann. Gleichzeitig verhindert der Verriegelungsring 45 aber auch, daß die Stützfinger 43 nach außen federn und sich die Vorsprünge 44 aus der Nut 9 des Schlauchs 3 lösen können.

Darüber hinaus wird durch das Zusammenwirken der Befestigungsfinger 41 und der Stützfinger 43, die von außen am Schlauch 3 im Bereich der Dichtungszone 6 anliegen, mit dem Verriegelungsring 45 verhindert, daß sich der Schlauch 3 in der Dichtungszone 6 aufweiten kann. Die Schlauchhülse 40, genauer gesagt die Befestigungsfinger 41 und die Stützfinger 43 bilden dann zusammen mit dem Verriegelungsring 45 die Schlauchverstärkung.

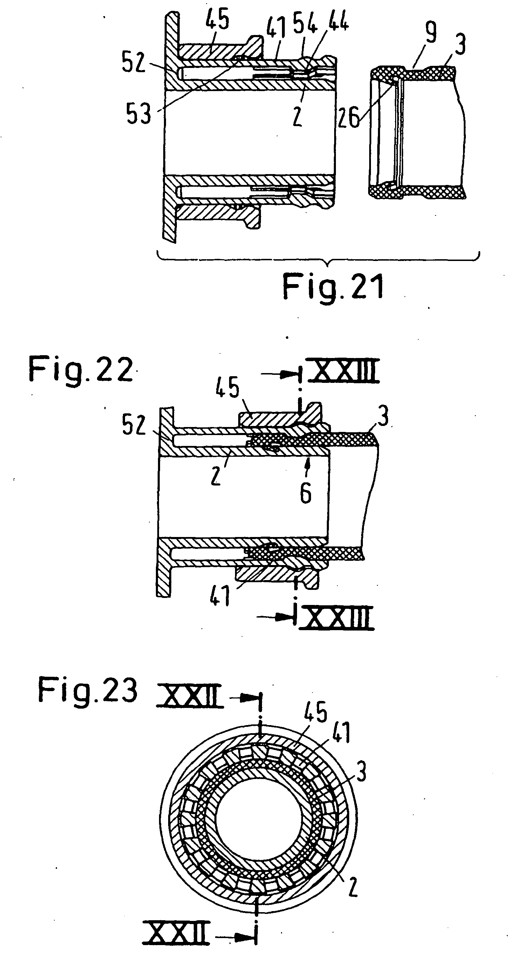

Die Fig. 21 bis 23 zeigen eine ähnliche Ausgestaltung, bei der gleiche und einander entsprechende Elemente mit den gleichen Bezugszeichen wie in den Fig. 15 bis 20 versehen sind.

In diesem Fall sind die Befestigungsfinger 41 am Rohrstutzen 2 befestigt und zwar über eine Basis 52, an der die Befestigungsfinger 41 federnd aufgehängt sind, so daß sie an ihrem der Basis 52 abgewandten Ende radial nach außen federn können.

In dieser Ausgestaltung sind die Vorsprünge 44 an den Befestigungsfingern 41 angeordnet. Wenn nun, wie in Fig. 22 dargestellt, der Schlauch 3 auf den Rohrstutzen 2 aufgeschoben wird, dann kommen die Vorsprünge 44 in Eingriff mit der Nut 9 am Schlauch 3. Sobald der Schlauch 3 weit genug auf den Rohrstutzen 2 aufgeschoben worden ist, federn die Befestigungsfinger 41 wieder zurück, so daß der Schlauch 3 auf dem Rohrstutzen 2 festgehalten wird.

Um ein radiales Ausfedern der Befestigungsfinger 41 zu verhindern, wird der Verriegelungsring 45 von der Basis 52 weg verschoben, wie dies in Fig. 22 dargestellt ist.

Der Verriegelungsring 45 weist auf seiner radialen Innenseite eine Ausbuchtung 53 auf, in die ein Vorsprung 54 an der radialen Außenseite der Befestigungsfinger 41 eingreift, wenn der Verriegelungsring 45 seine Verriegelungsposition erreicht hat (Fig. 22). Dort wird dann der Verriegelungsring 45 durch die Rastwirkung festgehalten. Zum Einrasten kann der Schlauch 3 etwas zusammengedrückt werden.

Bei dieser Ausgestaltung bildet der Verriegelungsring 45 zusammen mit den Befestigungsfingern 41 ebenfalls die Schlauchverstärkung, die verhindert, daß sich der Schlauch 3 unter Druck aufweitet und somit sicherstellt, daß die Verbindungsanordnung dicht bleibt.

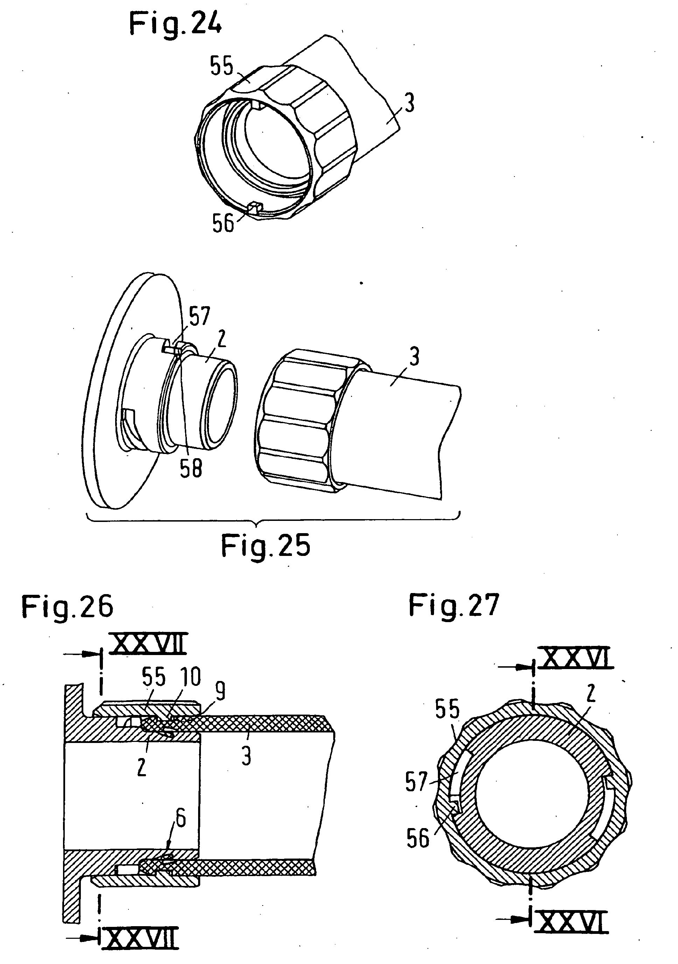

Die Fig. 24 bis 27 zeigen eine abgewandelte Befestigungsgeometrie. Gleiche und einander entsprechende Elemente sind mit den gleichen Bezugszeichen wie in den vorangehenden Figuren bezeichnet.

Der Schlauch 3 ist mit einer Art Überwurfmutter 55 versehen, die axial über den Schlauch 3 übersteht und an ihrer Innenseite radial nach innen vorstehende Zapfen 56 aufweist.

Der Rohrstutzen 2 weist eine entsprechende Anzahl von Nuten 57 auf, die schraubenlinienartig geführt sind und eine axial gerichtete Öffnung 58 aufweisen.

Wenn nun die Zapfen 56 in die Öffnung 58 axial eingeführt werden und die Überwurfmutter 55 gegenüber dem Rohrstutzen 2 verdreht wird, dann wird der Schlauch 3 in axialer Richtung auf den Rohrstutzen 2 gezogen. Die Überwurfmutter 55 bildet dann die Schlauchverstärkung, die mit einem radial nach innen gerichteten Vorsprung 10 in die Nut 9 am Umfang des Schlauchs 3 eingreift.

Man kann die Überwurfmutter 55 drehbar auf dem Schlauch 3 lagern, so daß beim Verdrehen der Überwurfmutter 55 gegenüber dem Rohrstutzen 2 nur eine axiale Bewegung des Schlauchs 3 auf dem Rohrstutzen 2 erforderlich ist. Man kann auch eine drehfeste Verbindung zwischen der Überwurfmutter 55 und dem Schlauch 3 vorsehen, so daß der Schlauch 3 gegenüber dem Rohrstutzen 2 etwas verdreht wird, wenn er auf den Rohrstutzen 2 aufgeschoben wird.

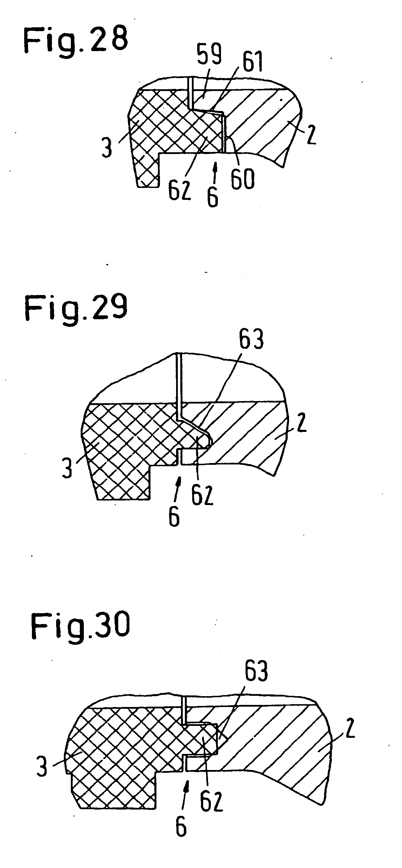

Die Fig. 28 bis 30 zeigen Möglichkeiten, wie man eine Verbindung zwischen dem Schlauch 3 und dem Rohrstutzen 2 gestalten kann, wenn der Schlauch 3 und der Rohrstutzen 2 den gleichen Außendurchmesser und gegebenenfalls auch den gleichen Innendurchmesser jedenfalls in der Dichtungszone 6 haben.

In Fig. 28 ist eine Ausgestaltung dargestellt, bei der der Schlauch 3 radial von innen an einem umlaufenden Vorsprung 59 des Rohrstutzens 2 anliegt und gleichzeitig auch an einer Stirnwand 60 des Rohrstutzens 2. Der Vorsprung 59 weist dabei eine sich konisch zum Schlauch 3 hin erweiternde Innenwand auf, so daß der Schlauch 3 mit einem in den Rohrstutzen 2 eingesetzten Vorsprung 62 etwas komprimiert wird, wenn er axial auf den Rohrstutzen 2 zu bewegt wird.

Bei der Ausgestaltung nach Fig. 29 wird der Vorsprung 62 des Schlauchs 3 in eine stirnseitige Nut 63 des Rohrstutzens 2 eingeführt und dort in der Endstellung komprimiert, so daß sich ebenfalls eine ausreichende Dichtung ergibt. Die Nut 63 hat im Querschnitt eine Dreiecksform, d.h. sie weist mit zunehmender Tiefe eine geringere Breite, d.h. eine geringere Erstreckung in radialer Richtung, auf.

Fig. 30 zeigt eine abgewandelte Ausgestaltung. Der Vorsprung 62 ist von annähernd rechteckigem Querschnitt, während die Nut 63 nur im Bereich ihres Nutgrundes dreieckartig ausgebildet ist. Auch dies führt zu einer hervorragenden Dichtigkeit, wenn der Schlauch 3 weit genug in Axialrichtung auf den Rohrstutzen 2 zu bewegt wird.

## Patentansprüche

1. Verbindungsanordnung mit einem Rohrstutzen und einem Schlauch aus einem gummiartigen Material, wobei der Rohrstutzen und der Schlauch in einer Dichtungszone aneinander anliegen, die zumindest auf einem Teil ihrer Länge von einer Schlauchverstärkung umgeben ist, die einen Teil einer Befestigungsgeometrie bildet, mit der der Rohrstutzen und der Schlauch zusammengehalten werden, **dadurch gekennzeichnet, dass** die Schlauchverstärkung (7) formschlüssig mit dem Schlauch (3) verbunden ist, wobei die Schlauchverstärkung (7) im Bereich der Dichtungszone (6) in eine Vertiefung (9) am Umfang des Schlauchs (3) eingreift.

2. Verbindungsanordnung nach Anspruch 1, **dadurch gekennzeichnet, daß** die Schlauchverstärkung (7) einen größeren Verformungswiderstand als der Schlauch (3) aufweist.

3. Verbindungsanordnung nach Anspruch 1 oder 2, **dadurch gekennzeichnet, daß** die Schlauchverstärkung (7) einen Wärmeausdehnungskoeffizienten aufweist, der im Bereich von 60 % bis 150 % des Wärmeausdehnungskoeffizienten des Rohrstutzens (2) liegt.

4. Verbindungsanordnung nach einem der Ansprüche 1 bis 3, **dadurch gekennzeichnet, daß** die Schlauchverstärkung (7) direkt haftend mit dem Schlauch (3) verbunden ist.

5. Verbindungsanordnung nach einem der Ansprüche 1 bis 4, **dadurch gekennzeichnet, daß** die Schlauchverstärkung (7) eine Faser- oder Gewebeeinlage aufweist, die in das Material des Schlauchs (3) eingebettet ist.

6. Verbindungsanordnung nach einem der Ansprüche 1 bis 4, **dadurch gekennzeichnet, daß** die Schlauchverstärkung (7) durch einen Stützring (8) gebildet ist, der den Schlauch (3) zumindest auf einem Teil der Länge der Dichtungszone (6) umgibt.

7. Verbindungsanordnung nach Anspruch 6, **dadurch gekennzeichnet, daß** die Schlauchverstärkung (7) eine im wesentlichen senkrecht zu einer Mittelachse (17) des Rohrstutzens (2) verlaufende Haltefläche (16) aufweist, an der ein Halteelement (22) angreift, das eine formschlüssige Verbindung zwischen der Schlauchverstärkung (7) und dem Rohrstutzen (2) erzeugt.

8. Verbindungsanordnung nach Anspruch 7, **dadurch gekennzeichnet, daß** die Schlauchverstärkung (7) eine in Umfangsrichtung verlaufende Nut (15) aufweist, deren Wand die Haltefläche (16) bildet.

9. Verbindungsanordnung nach Anspruch 7 oder 8, **dadurch gekennzeichnet, daß** das Halteelement (22) als federnder Ring ausgebildet ist.

10. Verbindungsanordnung nach einem der Ansprüche 6 bis 9, **dadurch gekennzeichnet, daß** der Schlauch (3) auf seiner Außenseite mindestens zwei radial vorstehende Nocken (37) und dazwischen Lücken (36) aufweist, daß hinter jeder Nocke (37) ein Freiraum (38) angeordnet ist und daß die Schlauchverstärkung (7) mindestens zwei nach innen ragende Vorsprünge (39) aufweist, die durch die Lücken (36) und in die Freiräume (38) passen.

11. Verbindungsanordnung nach Anspruch 10, **dadurch gekennzeichnet, daß** die Schlauchverstärkung (7) und/oder der Schlauch (3) einen Rastvorsprung tragen, der beim Verdrehen der Schlauchverstärkung (7) gegenüber dem Schlauch (3) einen zu überwindenden Druckpunkt bildet.

12. Verbindungsanordnung nach einem der Ansprüche 1 bis 11, **dadurch gekennzeichnet, daß** die Kombination aus Schlauch (3) und Schlauchverstärkung (7) an ihrem dem Rohrstutzen (2) zugewandten Ende eine konische Aufweitung (14) aufweist.

13. Verbindungsanordnung nach einem der Ansprüche 1 bis 12, **dadurch gekennzeichnet, daß** der Rohrstutzen (2) einen umlaufenden Vorsprung (18) aufweist, der auf seiner dem Schlauch (3) zugewandten Vorderseite (19) abgeschrägt ist.

14. Verbindungsanordnung nach einem der Ansprüche 1 bis 13, **dadurch gekennzeichnet, daß** der Vorsprung (18) auf seiner vom Schlauch (3) abgewandten Rückseite eine Stutzenhaltefläche (20) aufweist.

15. Verbindungsanordnung nach Anspruch 14, **dadurch gekennzeichnet, daß** der Rohrstutzen (2) in einer vorbestimmten Entfernung von der Rückseite einen Begrenzungsvorsprung (21) aufweist.

16. Verbindungsanordnung nach einem der Ansprüche 1 bis 4, **dadurch gekennzeichnet, daß** die Schlauchverstärkung mehrere axial gerichtete und radial federnde Befestigungsfinger (41) und einen axial verschiebbaren Verriegelungsring (45) aufweist, der in einer Verriegelungsposition einer Verformung der Befestigungsfinger (41) entgegenwirkt.

17. Verbindungsanordnung nach einem der Ansprüche 1 bis 16, **dadurch gekennzeichnet, daß** der Verriegelungsring (45) mit mindestens einem Befestigungsfinger (41) in Axialrichtung verrastbar ist.

18. Verbindungsanordnung nach Anspruch 16 oder 17, **dadurch gekennzeichnet, daß** zwischen mindestens zwei Befestigungsfingern (41) mindestens ein Stützfinger (43) angeordnet ist.

19. Verbindungsanordnung nach einem der Ansprüche 16 bis 18, **dadurch gekennzeichnet, daß** die Befestigungsfinger (41) am Rohrstutzen (2) befestigt sind.

20. Verbindungsanordnung nach einem der Ansprüche 16 bis 18, **dadurch gekennzeichnet, daß** die Befestigungsfinger (41) an einer Schlauchhülse (40) befestigt und am Rohrstutzen (2) elastisch verhakt sind.

21. Verbindungsanordnung nach einem der Ansprüche 1 bis 15, **dadurch gekennzeichnet, daß** die Befestigungsgeometrie als eine Bajonettverbindung (51, 56) ausgebildet ist.

22. Verbindungsanordnung nach einem der Ansprüche 1 bis 21, **dadurch gekennzeichnet, daß** der Rohrstutzen (2) an seinem in den Schlauch (3) eingesteckten Ende (5) eine Verjüngung aufweist.

23. Verbindungsanordnung nach einem der Ansprüche 1 bis 22, **dadurch gekennzeichnet, daß** sich der Schlauch (3) an seinem auf den Rohrstutzen (2) aufgesteckten Ende (4) im Bereich der Dichtungszone (6) erweitert.

24. Verbindungsanordnung nach einem der Ansprüche 1 bis 23, **dadurch gekennzeichnet, daß** der Schlauch (3) und/oder der Rohrstutzen (2) im Bereich der Dichtungszone (6) mindestens einen Wulst (28, 29) aufweist.

25. Verbindungsanordnung nach einem der Ansprüche 1 bis 24, **dadurch gekennzeichnet, daß** der Schlauch (3) in der Dichtungszone (6) eine mit dem Rohrstutzen (2) zusammenwirkende Dichtlippe (26, 27) aufweist.

26. Verbindungsanordnung nach einem der Ansprüche 1 bis 25, **dadurch gekennzeichnet, daß** der Schlauch (3) und der Rohrstutzen (2) in der Dichtungszone (6) eine stirnseitige und eine umfangsseitige Berührungskomponente (60, 61) aufweisen.

27. Verbindungsanordnung nach Anspruch 26, **dadurch gekennzeichnet, daß** der Rohrstutzen (2) eine stirnseitige umlaufende Nut (63) aufweist, in die der Schlauch (3) mit einem stirnseitigen umlaufenden Vorsprung (62) eingreift.

28. Verbindungsanordnung nach Anspruch 27, **dadurch gekennzeichnet, daß** die Nut (63) mit zunehmender Tiefe eine abnehmende Breite aufweist.

## Claims

1. Connector assembly comprising a pipe socket and a hose made of rubber-like material, wherein the pipe socket and the hose abut each other in a sealing zone which at least over a part of a length thereof is surrounded by a hose reinforcement that forms part of a geometric locking configuration with which the pipe socket and the hose are held together, **characterised in that** the hose reinforcement (7) is connected with the hose (3) in a positive locking manner wherein the hose reinforcement (7) engages in the area of the sealing zone (6) in a recess (9) on the circumference of the hose (3).

2. Connector assembly according to claim 1, **characterised in that** the hose reinforcement (7) has a stronger deformation resistance than the hose (3).

3. Connector assembly according to claim 1 or 2, **characterised in that** the hose reinforcement (7) has a heat expansion coefficient which is about 60 % to 150 % of the heat expansion coefficient of the pipe socket (2).

4. Connector assembly according to one of claims 1 to 3, **characterised in that** the hose reinforcement (7) is connected immediately adhering to the hose.

5. Connector assembly according to one of claims 1 to 4, **characterised in that** the hose reinforcement (7)has a fiber inlay or a textile inlay which is embedded in the material of the hose (3).

6. Connector assembly according to one of claims 1 to 4, **characterised in that** the hose reinforcement (7) is formed by a bearing ring (8) which encases the hose (3) at least over a length of the sealing zone (6).

7. Connector assembly according to claim 6, **characterised in that** the hose reinforcement (7) has a locking surface which proceeds essentially vertically to the center axis (17) of the pipe socket (2) on which a locking element (22) engages for producing a form-fitting connection between the hose reinforcement (7) and the pipe socket (2).

8. Connector assembly according to claim 7, **characterised in that** the hose reinforcement (7) has a circumferentially extending groove (15), a wall of which forming the locking surface (16).

9. Connector assembly according to claim 7 or 8, **characterised in that** the locking surface (22) is comprised of an elastic ring.

10. Connector assembly according to one of claims 6 to 9, **characterised in that** the hose (3) has on its outside at least two radially projecting cams (37) and openings (36) between the cams, wherein behind every cam (37) there is a clearance (38) and wherein the hose reinforcement (7) has at least two inwardly projecting juts (39) which fit through the openings (36) and into the clearances (38).

11. Connector assembly according to claim 10, **characterised in that** the hose reinforcement (7) and/or the hose (3) provide a locking jut which forms a pressure point that needs to be surpassed when twisting the hose reinforcement (7) against the hose (3).

12. Connector assembly according to one of claims 1 to 11, **characterised in that** the combination of hose (3) and hose reinforcement (7) provide at its end facing the pipe socket (2) a conical expansion (14).

13. Connector assembly according to one of claims 1 to 12, **characterised in that** the pipe socket (2) has a circumferential projection (8) which is beveled at its front end (19) facing the hose (3).

14. Connector assembly according to one of claims 1 to 13, **characterised in that** the projection (18) has on its backside facing away from the hose (3) a socket locking plane (20).

15. Connector assembly according to claim 14, **characterised in that** the pipe socket (2) has a boundary jut (21) at a predetermined distance from the backside.

16. Connector assembly according to one of claims 1 to 4, **characterised in that** the hose reinforcement has several axially positioned and radially swinging fastening fingers (41) and an axially adjustable locking ring (45) which counteracts in a locked position a deformation of the fastening fingers (41).

17. Connector assembly according to one of claims 1 to 16, **characterised in that** the locking ring (45) is engageable in the axial direction with at least one fastening finger (41).

18. Connector assembly according to claim 16 or 17, **characterised in that** at least one support finger (43) is arranged between at least two fastening fingers (41).

19. Connector assembly according to one of claims 16 to 18, **characterised in that** the fastening fingers (41) are attached to the pipe socket (2).

20. Connector assembly according to one of claims 16 to 18, **characterised in that** the fastening fingers (41) are attached to a hose sleeve (40) and elastically hooked to the pipe socket (2).

21. Connector assembly according to one of claims 1 to 15, **characterised in that** the geometric fastening configuration is provided in the form of a bayonet connection (51, 56).

22. Connector assembly according to one of claims 1 to 21, **characterised in that** the pipe socket (2) has a diminution taper at the end (5) thereof which is plugged into the hose (3).

23. Connector assembly according to one of claims 1 to 22, **characterised in that** the hose (3) expands in the area of the sealing zone (6) at its end (4) pushed onto the pipe socket (2).

24. Connector assembly according to one of claims 1 to 23, **characterised in that** the hose (3) and/or the pipe socket (2) has in the area of the sealing zone (6) at least one bead (28, 29).

25. Connector assembly according to one of claims 1 to 24, **characterised in that** the hose (3) has in the sealing zone (6) a sealing lip (26, 27) which cooperates with the pipe socket (2).

26. Connector assembly according to one of claims 1 to 25, **characterised in that** the hose (3) and the pipe socket (2) have in the sealing zone (6) a frontal and a circumferential contact component.

27. Connector assembly according to claim 26, **characterised in that** the pipe socket (2) has a frontal circumferential groove (63) in which the hose (3) engages with its frontal circumferential jut (62).

28. Connector assembly according to claim 27, **characterised in that** the groove (63) has with increasing depths a decreasing width.

## Revendications

1. Dispositif de connexion avec une tubulure et un tuyau flexible en un matériau de type caoutchouc, dans lequel la tubulure et le tuyau flexible s'appuient l'un contre l'autre dans une zone d'étanchéité, qui est entourée au moins sur une partie de sa longueur par un renforcement de tuyau flexible, qui forme une partie d'une géométrie de fixation, avec laquelle la tubulure et le tuyau flexible sont maintenus ensemble, **caractérisé en ce que** le renforcement de tuyau flexible (7) est relié au tuyau flexible (3) par correspondance de forme, le renforcement de tuyau flexible (7) s'engageant au niveau de la zone d'étanchéité (6) dans un évidement (9) à la périphérie du tuyau flexible (3).

2. Dispositif de connexion selon la revendication 1, **caractérisé en ce que** le renforcement de tuyau flexible (7) présente une résistance à la déformation plus grande que le tuyau flexible (3).

3. Dispositif de connexion selon la revendication 1 ou 2, **caractérisé en ce que** le renforcement de tuyau flexible (7) présente un coefficient de dilatation thermique, qui se situe dans la plage allant de 60 % à 150 % du coefficient de dilatation thermique de la tubulure (2).

4. Dispositif de connexion selon l'une quelconque des revendications 1 à 3, **caractérisé en ce que** le renforcement de tuyau flexible (7) est relié de manière directement adhésive au tuyau flexible (3).

5. Dispositif de connexion selon l'une quelconque des revendications 1 à 4, **caractérisé en ce que** le renforcement de tuyau flexible (7) présente une couche de fibres ou de tissu, qui est noyée dans le matériau du tuyau flexible (3).

6. Dispositif de connexion selon l'une quelconque des revendications 1 à 4, **caractérisé en ce que** le renforcement de tuyau flexible (7) est formé par une bague d'appui (8), qui entoure le tuyau flexible (3) au moins sur une partie de la longueur de la zone d'étanchéité (6).

7. Dispositif de connexion selon la revendication 6, **caractérisé en ce que** le renforcement de tuyau flexible (7) présente une surface de retenue (16) s'étendant de manière essentiellement perpendiculaire à un axe médian (17) de la tubulure (2), au niveau de laquelle surface s'applique un élément de retenue (22) qui génère une liaison par correspondance de forme entre le renforcement de tuyau flexible (7) et la tubulure (2).

8. Dispositif de connexion selon la revendication 7, **caractérisé en ce que** le renforcement de tuyau flexible (7) présente une rainure (15) s'étendant dans le sens périphérique, dont la paroi forme la surface de retenue (16).

9. Dispositif de connexion selon la revendication 7 ou 8, **caractérisé en ce que** l'élément de retenue (22) est réalisé sous forme de bague élastique.

10. Dispositif de connexion selon l'une quelconque des revendications 6 à 9, **caractérisé en ce que** le tuyau flexible (3) présente sur son côté extérieur au moins deux ergots (37) en saillie radiale et entre, des interstices (36), **en ce qu'**un espace libre (38) est agencé derrière chaque ergot (37) et **en ce que** le renforcement de tuyau flexible (7) présente au moins deux saillies (39) dépassant vers l'intérieur, qui s'insèrent à travers les interstices (36) et dans les espaces libres (38).

11. Dispositif de connexion selon la revendication 10, **caractérisé en ce que** le renforcement de tuyau flexible (7) et/ou le tuyau flexible (3) portent une saillie d'arrêt, qui forme un point de pression à franchir lors de la rotation du renforcement de tuyau flexible (7) par rapport au tuyau flexible (3).

12. Dispositif de connexion selon l'une quelconque des revendications 1 à 11, **caractérisé en ce que** la combinaison tuyau flexible (3) et renforcement de tuyau flexible (7) présente, au niveau de son extrémité tournée vers la tubulure (2), un élargissement conique (14).

13. Dispositif de connexion selon l'une quelconque des revendications 1 à 12, **caractérisé en ce que** la tubulure (2) présente une saillie périphérique (18), qui est biseautée sur son côté avant (19) tourné vers le tuyau flexible (3).

14. Dispositif de connexion selon l'une quelconque des revendications 1 à 13, **caractérisé en ce que** la saillie (18) présente, sur son côté arrière opposé au tuyau flexible (3), une surface de retenue de tubulure (20).

15. Dispositif de connexion selon la revendication 14, **caractérisé en ce que** la tubulure (2) présente à une distance prédéfinie du côté arrière une saillie de délimitation (21).

16. Dispositif de connexion selon l'une quelconque des revendications 1 à 4, **caractérisé en ce que** le renforcement de tuyau flexible présente plusieurs doigts de fixation (41) orientés axialement et faisant ressort radialement et une bague de verrouillage (45) axialement mobile, qui réagit à une déformation des doigts de fixation (41) dans une position de verrouillage.

17. Dispositif de connexion selon l'une quelconque des revendications 1 à 16, **caractérisé en ce que** la bague de verrouillage (45) peut s'enclencher avec au moins un doigt de fixation (41) dans le sens axial.

18. Dispositif de connexion selon la revendication 16 ou 17, **caractérisé en ce qu'**au moins un doigt d'appui (43) est agencé entre au moins deux doigts de fixation (41).

19. Dispositif de connexion selon l'une quelconque des revendications 16 à 18, **caractérisé en ce que** les doigts de fixation (41) sont fixés au niveau de la tubulure (2).

20. Dispositif de connexion selon l'une quelconque des revendications 16 à 18, **caractérisé en ce que** les doigts de fixation (41) sont fixés au niveau d'une douille de tuyau flexible (40) et accrochés au niveau de la tubulure (2) de manière élastique.

21. Dispositif de connexion selon l'une quelconque des revendications 1 à 15, **caractérisé en ce que** la géométrie de fixation est réalisée sous forme d'assemblage à baïonnette (51, 56).

22. Dispositif de connexion selon l'une quelconque des revendications 1 à 21, **caractérisé en ce que** la tubulure (2) présente un rétrécissement au niveau de son extrémité (5) enfichée dans le tuyau flexible (3).

23. Dispositif de connexion selon l'une quelconque des revendications 1 à 22, **caractérisé en ce que** le tuyau flexible (3) s'élargit au niveau de son extrémité (4) montée sur la tubulure (2) au niveau de la zone d'étanchéité (6).

24. Dispositif de connexion selon l'une quelconque des revendications 1 à 23, **caractérisé en ce que** le tuyau flexible (3) et/ou la tubulure (2) présente au moins un renflement (28, 29) au niveau de la zone d'étanchéité (6).

25. Dispositif de connexion selon l'une quelconque des revendications 1 à 24, **caractérisé en ce que** le tuyau flexible (3) présente, dans la zone d'étanchéité (6), une lèvre d'étanchéité (26, 27) coopérant avec la tubulure (2).

26. Dispositif de connexion selon l'une quelconque des revendications 1 à 25, **caractérisé en ce que** le tuyau flexible (3) et la tubulure (2) présentent dans la zone d'étanchéité (6) une composante de contact frontale et une composante de contact périphérique (60, 61).

27. Dispositif de connexion selon la revendication 26, **caractérisé en ce que** la tubulure (2) présente une rainure (63) périphérique frontale, dans laquelle s'engage le tuyau flexible (3) avec une saillie (62) périphérique frontale.

28. Dispositif de connexion selon la revendication 27, **caractérisé en ce que** la rainure (63) présente une largeur décroissante à mesure que la profondeur augmente.
